# EUROPÄISCHE PATENTSCHRIFT

(11) **EP 2 791 152 B1**
(45) Veröffentlichungstag und Bekanntmachung des Hinweises auf die Patenterteilung: **07.11.2018**
(21) Anmeldenummer: 12809596.5
(22) Anmeldetag: 08.12.2012
(51) Int. Cl.: C07F 9/30, C08K 5/5313, C09K 21/12

(54) **GEMISCHE VON DIPHOSPHINSÄUREN UND DIALKYLPHOSPHINSÄUREN, EIN VERFAHREN ZU DEREN HERSTELLUNG UND IHRE VERWENDUNG**
MIXTURES OF DIPHOSPHINIC ACIDS AND DIALKYLPHOSPHINIC ACIDS, A PROCESS FOR THE PREPARATION THEREOF AND THE USE THEREOF
MÉLANGES D'ACIDES DIPHOSPHINIQUES ET D'ACIDES DIALKYLPHOSPHINIQUES, PROCÉDÉ POUR LEUR PRÉPARATION ET LEUR UTILISATION

(30) Priorität: 16.12.2011 DE 102011121503
(43) Veröffentlichungstag der Anmeldung: 22.10.2014
(73) Patentinhaber: Clariant International Ltd, 4132 Muttenz (CH)
(72) Erfinder: SCHNEIDER, Fabian, 69214 Eppelheim (DE); OSTEROD, Frank, 50933 Köln (DE); BAUER, Harald, 50170 Kerpen (DE); SICKEN, Martin, 51149 Köln (DE)
(74) Vertreter: Mikulecky, Klaus
(86) Internationale Anmeldenummer: PCT/EP2012/005078
(87) Internationale Veröffentlichungsnummer: WO 2013/087179

(56) Entgegenhaltungen:
- EP-A1- 1 217 004
- WO-A2-2004/014993
- WO-A2-2010/069545
- DATABASE REAXYS [Online] Elsevier; 1960, Harwood et al: "Rx-ID: 891204", XP002692062,accession no. 891204 Database accession no. 891204 & HARWOOD ET AL: J. AM. CHEM. SOC., Bd. 82, 1960, Seiten 423-426,
- DATABASE REAXYS [Online] Elsevier; 1986, Nifant'ev et al: "Rx-ID: 1915900, 1915980, 1917638", XP002692063,accession no. 1915900, 1915980, 1917638 Database accession no. 1915900, 1915980, 1917638 & NIFANT'EV E E ET AL: "Reactions of acetylenes with hypophosphorous and phosphonous acids", JOURNAL OF GENERAL CHEMISTRY USSR, CONSULTANTS BUREAU, NEW YORK, NY, US, Bd. 56, Nr. 4, 20. September 1986 (1986-09-20), Seiten 680-688, XP002165520, ISSN: 0022-1279

## Beschreibung

Die Erfindung betrifft Gemische von mindestens einer Diphosphinsäure und mindestens einer Dialkylphosphinsäure, ein Verfahren zu deren Herstellung und ihre Verwendung.

Bei der Herstellung von Leiterplatten, die in zunehmenden Maß in verschiedenen Geräten, z. B. Computer, Kameras, Mobiltelefonen, LCD-, TFT-Bildschirmen und anderen Elektronikgeräten Verwendung finden, werden unterschiedliche Materialien, insbesondere Kunststoffe eingesetzt. Hierzu gehören vor allem Duroplaste, glasfaserverstärkte Duroplaste und Thermoplaste. Besonders oft werden wegen ihrer guten Eigenschaften Epoxidharze genutzt.

Gemäß den entsprechenden Normen (IPC-4101, Specification for Base Materials for Rigid ans Multilayer Printed Boards) müssen diese Leiterplatten flammwidrig bzw. flammfest ausgerüstet werden.

Die thermische Expansion von Leiterplatten stellt bei deren Herstellung ein Problem dar. Die Bedingungen der Elektronikfertigung von Leiterplatten verlangen, dass Leiterplatten hohe thermische Belastungen ohne Schädigungen oder Verformungen aushalten. Das Auftragen der Leiterbahnen (bleifreies Löten) auf Leiterplatten erfolgt bei Temperaturen bis ca. 260 °C.

Daher ist es von Bedeutung, dass sich Leiterplatten unter thermischem Stress nicht verziehen und die Produkte maßhaltig bleiben.

Die thermische Expansion ist vor allem auch bereits bei Prepregs (Kurzform für preimpregnated fibres, das sind vorimprägnierte Fasern) und Laminaten von Bedeutung, da diese die Rohformen bzw. Vorstufen von Leiterplatten darstellen.

Es ist somit wichtig die thermische Expansion von Prüfkörpern zu minimieren, um ein gutes, maßhaltiges Produkt (fertige Leiterplatte) zu erhalten.

Die EP-A-1217004 beschreibt ein Reaktionsprodukt, das Ethanbis(methylphosphinsäure) in einer Reinheit von 99 % enthält. Bei den restlichen Substanzen, die in 1 % enthalten sind, handelt es sich um nicht-umgesetztes Edukt, d. h. Methanphosphonigsäure.

In der WO-A-2004/014993 werden Polyamidzusammensetzungen beschrieben, die Dialkylphosphinsäuren enthalten, bevorzugt sind Diethylphosphinsäuren.

Die WO-A-2010/069545 beschreibt ein Verfahren zur Herstellung von Ethylendialkylphosphinsäuren, -salzen und -estern, bei dem eine Phosphinsäurequelle mit Olefinen zunächst zu einer Alkylphosphonigsäure, -salz oder -ester und danach zu einem Ethylendialkylphosphinsäurederivat umgesetzt wird.

Es ist Aufgabe der vorliegenden Erfindung, Kunststoffe für Prepregs, Leiterplatten und Laminate so auszurüsten, dass diese - wenn überhaupt - nur einer sehr geringen thermischen Expansion unterliegen und die Maßhaltigkeit erfüllt wird.

Diese Aufgabe wird gelöst durch Gemische von mindestens einer Diphosphinsäure der Formel (I) 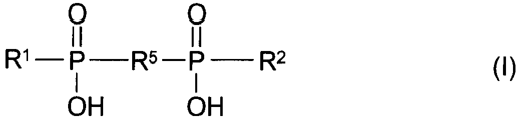 worin
- R¹, R²: gleich oder verschieden sind und H, Ethyl, n-Propyl, iso-Propyl, n-Butyl, iso-Butyl, tert.-Butyl, n-Pentyl, iso-Pentyl, n-Hexyl und/oder iso-Hexyl
- R⁵: Ethylen, Butylen, Hexylen oder Octylen bedeuten
mit mindestens einer Dialkylphosphinsäure der Formel (II) 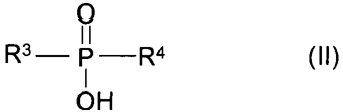 worin
- R³, R⁴: gleich oder verschieden sind und unabhängig von R¹ und R² Ethyl, n-Propyl, iso-Propyl, n-Butyl, iso-Butyl, tert.-Butyl, n-Pentyl, iso-Pentyl, n-Hexyl und/oder iso-Hexyl bedeuten
und wobei die Gemische 0,1 bis 99,9 Gew.-% Diphosphinsäure der Formel (I) und 99,9 bis 0,1 Gew.-% Dialkylphosphinsäure der Formel (II) enthalten.

Bevorzugt sind R¹, R² gleich oder verschieden und bedeuten H, Ethyl, n-Propyl, iso-Propyl, n-Butyl, iso-Butyl, tert.-Butyl, n-Pentyl, iso-Pentyl, n-Hexyl, iso-Hexyl ; R³ und R⁴ sind gleich oder verschieden und bedeuten unabhängig von R¹ und R² Ethyl, n-Propyl, iso-Propyl, n-Butyl, iso-Butyl, tert.-Butyl, n-Pentyl, iso-Pentyl, n-Hexyl, iso-Hexyl und R⁵ bedeutet Ethylen, Butylen, Hexylen oder Octylen.

Besonders bevorzugt sind R¹, R², R³ und R⁴ gleich oder verschieden und bedeuten Ethyl und/oder Butyl und R⁵ bedeutet Ethylen oder Butylen.

Die Gemische enthalten 0,1 bis 99,9 Gew.-% Diphosphinsäure der Formel (I) und 99,9 bis 0,1 Gew.-% Dialkylphosphinsäure der Formel (II). Bevorzugt enthalten die Gemische auch 60 bis 99,9 Gew.-% Diphosphinsäure der Formel (I) und 40 bis 0,1 Gew.-% Dialkylphosphinsäure der Formel (II). Bevorzugt sind auch solche Gemische, welche 80 bis 99,9 Gew.-% Diphosphinsäure der Formel (I) und 20 bis 0,1 Gew.-% Dialkylphosphinsäure der Formel (II) enthalten.

Besonders bevorzugt sind Gemische, die 90 bis 99,9 Gew.-% Diphosphinsäure der Formel (I) und 10 bis 0,1 Gew.-% Dialkylphosphinsäure der Formel (II) enthalten.

Insbesondere bevorzugt sind Gemische, welche 95 bis 99,9 Gew.-% Diphosphinsäure der Formel (I) und 5 bis 0,1 Gew.-% Dialkylphosphinsäure der Formel (II) enthalten.

Sehr bevorzugt sind Gemische, die 98 bis 99,9 Gew.-% Diphosphinsäure der Formel (I) und 2 bis 0,1 Gew.-% Dialkylphosphinsäure der Formel (II) enthalten.

Bevorzugt handelt es sich bei der Diphosphinsäure um Ethylen-1,2-bis(ethylphosphinsäure), Ethylen-1,2-bis(propylphosphinsäure), Ethylen-1,2-bis(butylphosphinsäure), Ethylen-1,2-bis(pentylphosphinsäure), Ethylen-1,2-bis(hexylphosphinsäure), Butan-1,2-bis(ethylphosphinsäure), Butan-1,2-bis(propylphosphinsäure), Butan-1,2-bis(butylphosphinsäure), Butan-1,2-bis(pentylphosphinsäure), Butan-1,2-bis(hexylphosphinsäure), Hexan-1,2-bis(ethylphosphinsäure), Hexan-1,2-bis(propylphosphinsäure), Hexan-1,2-bis(butylphosphinsäure), Hexan-1,2-bis(pentylphosphinsäure) oder Hexan-1,2-bis(hexylphosphinsäure) und bei der Dialkylphosphinsäure um Diethylphosphinsäure, Dipropylphosphinsäure, Dibutylphosphinsäure, Dipentylphosphinsäure oder Dihexylphosphinsäure.

Die bevorzugten Gemische enthalten 98 bis 99,9 Gew.-% Ethylen-1,2-bis(ethylphosphinsäure) und 2 bis 0,1 Gew.-% Diethylphosphinsäure.

Bevorzugt enthalten die Gemische weiterhin mindestens einen Synergisten.

Bevorzugt handelt es sich bei dem Synergisten um eine Stickstoff enthaltende Verbindung wie Melem, Melam, Melon, Melaminborat, Melamincyanurat, Melaminphosphat, Dimelaminphosphat, Pentamelamintriphosphat, Trimelamindiphosphat, Tetrakismelamintriphosphat, Hexakismelaminpentaphosphat, Melamindiphosphat, Melamintetraphosphat, Melaminpyrophosphat, Melaminpolyphosphat, Melampolyphosphat, Melempolyphosphat und/oder Melonpolyphosphat;
um Aluminiumverbindungen wie Aluminiumhydroxid, Halloysite, Saphire-Produkte, Böhmit, Nano-Böhmit;
um Magnesiumverbindungen wie Magnesiumhydroxid;
um Zinnverbindungen wie Zinnoxide;
um Antimonverbindungen wie Antimonoxide;
um Zinkverbindungen wie Zinkoxid, Zinkhydroxid, Zinkoxidhydrat, Zinkcarbonat, Zinkstannat, Zinkhydroxystannat, Zink-Silicat, Zinkphosphat, Zinkborphosphat, Zinkborat und/oder Zinkmolybdat;
um Siliziumverbindungen, wie Silikate und/oder Silikone;
um Phosphorverbindungen wie Phosphinsäuren und ihre Salze, Phosphonsäuren und ihre Salze und/oder Phosphinoxide, Phosphazene und/oder Piperazin(pyro)phosphate;
um Carbodiimide, Piperazine, (Poly-)isocyanate, Styrol-Acryl-Polymere und/oder Carbinylbiscaprolactam;
um stickstoffhaltige Verbindungen aus der Gruppe oligomere Ester des Tris(hydroxyethyl)isocyanurats mit aromatischen Polycarbinsäuren, oder Benzoguanamin, Acetoguanamin, Tris(hydroxyethyl)-isocyanurat, Allantoin, Glycouril, Cyanurate, Cyanurate-Epoxidverbindungen, Harnstoffcyanurat, Dicyanamid, Guanidin, Guanidinphosphat und/oder -sulfat.
Bevorzugt enthalten die Gemische 99 bis 1 Gew.-% an Gemisch von mindestens einer Diphosphinsäuren der Formel (I) und mindestens einer Dialkylphosphinsäure der Formel (II) nach mindestens einem der Ansprüche 1 bis 9 und 1 bis 99 Gew.-% an Synergist.
Die Erfindung betrifft auch ein Verfahren zur Herstellung der Gemische nach mindestens einem der Ansprüche 1 bis 9, dadurch gekennzeichnet, dass eine Phosphinsäurequelle mit einem Alkin in Anwesenheit eines Initiators umgesetzt wird, wobei es sich bei der Phosphinsäurequelle um Ethylphosphinsäure und bei dem Alkin um Acetylen, Methylacetylen, 1-Butin, 1-Hexin, 2-Hexin, 1-Octin, 4-Octin, 1-Butin-4-ol, 2-Butin-1-ol, 3-Butin-1-ol, 5-Hexin1-ol, 1-Octin-3-ol, 1-Pentin, Phenylacetylen, Trimethylsilylacetylen und/oder Diphenylacetylen und bei dem Initiator um einen Radikalinitiator mit einer Stickstoff-Stickstoff- oder einer Sauerstoff-Sauerstoff-Bindung handelt und die Reaktionstemperatur zwischen 50 und 150 °C beträgt.
Bevorzugt handelt es sich bei dem Radikalinitiator um 2,2'-Azobis(2-amidinopropan)-dihydrochlorid, 2,2'-Azobis(N,N'-dimethylenisobutyramidin)dihydrochlorid, Azobis(isobutyronitril), 4,4'Azobis(4-cyano-pentansäure) und/oder 2,2'Azobis(2-methylbutyronitril) oder um Wasserstoffperoxid, Kaliumoperoxodisulfat, Dibenzoylperoxid, Di-tert.-butylperoxid, Peressigsäure, Diisobutyryl-peroxid, Cumol-peroxineodecanoat, tert.-Butyl-peroxineodecanoat, tert.-Butyl-peroxipivalat, tert.-Amyl-peroxipivalat, Dipropyl-peroxidicarbonat, Dibutyl-peroxidicarbonat, Dimyristyl-peroxidicarbonat, Dilauroyl-peroxid, 1,1,3,3-Tetramethylbutyl-peroxi-2-ethylhexanoat, tert.-Amyl-peroxi-2-ethylhexylcarbonat, tert.-Butyl-peroxiisobutyrat, 1,1-Di-(tert.-butylperoxi)-cyclohexan, tert.-Butyl-peroxibenzoat, tert.-Butyl-peroxiacetat, tert.-Butyl-peroxidiethylacetat, tert.-Butyl-peroxiisopropylcarbonat, 2,2-Di-(tert.-butylperoxi)-butan, tert.-Amyl-hydroperoxid und/oder 2,5-Dimethyl-2,5-di-(tert.-butylperoxi)-hexan.

Bevorzugt handelt es sich bei dem Lösungsmittel um gradkettige oder verzweigte Alkane, alkylsubstituierte aromatische Lösungsmittel, mit Wasser nicht oder nur teilweise mischbare Alkohole oder Ether, Wasser und/oder Essigsäure.

Bevorzugt handelt es sich bei dem Alkohol um Methanol, Propanol, i-Butanol und/oder n-Butanol oder Mischungen dieser Alkohole mit Wasser.

Die Erfindung betrifft auch die Verwendung von Gemischen von mindestens einer Diphosphinsäure der Formel (I) und mindestens einer Dialkylphosphinsäure der Formel (II) nach mindestens einem der Ansprüche 1 bis 9 als Zwischenprodukt für weitere Synthesen, als Binder, als Vernetzer bzw. Beschleuniger beim Aushärten von Epoxyharzen, Polyurethanen und ungesättigten Polyesterharzen, als Polymerstabilisatoren, als Pflanzenschutzmittel, als Sequestrierungsmittel, als Mineralöl-Additiv, als Korrosionsschutzmittel, in Wasch- und Reinigungsmittelanwendungen und in Elektronikanwendungen.

Die Erfindung betrifft zudem die Verwendung von Gemischen von mindestens einer Diphosphinsäure der Formel (I) und mindestens einer Dialkylphosphinsäure der Formel (II) nach mindestens einem der Ansprüche 1 bis 11 als Flammschutzmittel, insbesondere als Flammschutzmittel für Klarlacke und Intumeszenzbeschichtungen, als Flammschutzmittel für Holz und andere cellulosehaltige Produkte, als reaktives und/oder nicht reaktives Flammschutzmittel für Polymere, zur Herstellung von flammgeschützten Polymerformmassen, zur Herstellung von flammgeschützten Polymerformkörpern und/oder zum flammhemmend Ausrüsten von Polyester und Cellulose-Rein- und Mischgeweben durch Imprägnierung sowie als Synergist.

Die Erfindung umfasst auch eine flammgeschützte thermoplastische oder duroplastische Polymerformmasse, Polymer-Formkörper, -Filme, -Fäden und -Fasern enthaltend 0,5 bis 45 Gew.-% Gemische nach mindestens einem der Ansprüche 1 bis 11, 55 bis 99,5 Gew.-% thermoplastisches oder duroplastisches Polymer oder Mischungen derselben, 0 bis 55 Gew.-% Additive und 0 bis 55 Gew.-% Füllstoff bzw. Verstärkungsmaterialien, wobei die Summe der Komponenten 100 Gew.-% beträgt.

Die Erfindung betrifft schließlich auch eine flammgeschützte thermoplastische oder duroplastische polymere Formmasse, Polymer-Formkörper, -Filme, -Fäden und -Fasern, enthaltend 2 bis 30 Gew.-% Gemische nach mindestens einem der Ansprüche 1 bis 11, 60 bis 94 Gew.-% thermoplastisches oder duroplastisches Polymer oder Mischungen derselben, 2 bis 30 Gew.-% Additive und 2 bis 30 Gew.-% Füllstoff bzw. Verstärkungsmaterialien, wobei die Summe der Komponenten 100 Gew.-% beträgt.

Bevorzugte Gemische aus Diphosphinsäure der Formel (I) und Dialkylphosphinsäure der Formel (II) sind beispielsweise: Ethylen-1,2-bis(ethylphosphinsäure) und Diethylphosphinsäure, Ethylen-1,2-bis(ethylphosphinsäure) und Butyl-ethyl-phosphinsäure, Ethylen-1,2-bis(ethylphosphinsäure) und Butyl-butyl-phosphinsäure, Ethylen-1,2-bis(ethylphosphinsäure) und Hexyl-ethyl-phosphinsäure, Ethylen-1,2-bis(ethylphosphinsäure) und Octyl-ethyl-phosphinsäure, Ethylen-1,2-bis(ethylphosphinsäure) und Hexyl-butyl-phosphinsäure, Ethylen-1,2-bis(butylphosphinsäure) und Diethylphosphinsäure, Ethylen-1,2-bis(butylphosphinsäure) und Butyl-ethyl-phosphinsäure, Ethylen-1,2-bis(butylphosphinsäure) und Butyl-butyl-phosphinsäure, Ethylen-1,2-bis(butylphosphinsäure) und Hexyl-ethyl-phosphinsäure, Ethylen-1,2-bis(butylphosphinsäure) und Octyl-ethyl-phosphinsäure, Ethylen-1,2-bis(butylphosphinsäure) und Hexyl-butyl-phosphinsäure, Butylen-1,2-bis(ethylphosphinsäure) und Diethylphosphinsäure, Butylen-1,2-bis(ethylphosphinsäure) und Butyl-ethyl-phosphinsäure, Butylen-1,2-bis(ethylphosphinsäure) und Butyl-butyl-phosphinsäure, Butylen-1,2-bis(ethylphosphinsäure) und Hexyl-ethyl-phosphinsäure, Butylen-1,2-bis(ethylphosphinsäure) und Octyl-ethyl-phosphinsäure, Butylen-1,2-bis(ethylphosphinsäure) und Hexyl-butyl-phosphinsäure, Butylen-1,2-bis(butylphosphinsäure) und Diethylphosphinsäure, Butylen-1,2-bis(butylphosphinsäure) und Butyl-ethyl-phosphinsäure, Butylen-1,2-bis(butylphosphinsäure) und Butyl-butyl-phosphinsäure, Butylen-1,2-bis(butylphosphinsäure) und Hexyl-ethyl-phosphinsäure, Butylen-1,2-bis(butylphosphinsäure) und Octyl-ethyl-phosphinsäure, Butylen-1,2-bis(butylphosphinsäure) und Hexyl-butyl-phosphinsäure.

Die vorgenannten Verbindungen können auch als Mehrfach-Mischungen vorliegen.
Bevorzugte Dreier-Gemische sind etwa Ethylen-1,2-bis(ethylphosphinsäure) und Diethylphosphinsäure und Butyl-ethyl-phosphinsäure, Ethylen-1,2-bis(ethylphosphinsäure) und Butyl-ethyl-phosphinsäure und Butyl-butyl-phosphinsäure, Butylen-1,2-bis(ethylphosphinsäure) und Diethylphosphinsäure und Butyl-ethyl-phosphinsäure, Ethylen-1,2-bis(ethylphosphinsäure) und Butylen-1,2-bis(ethylphosphinsäure) und Diethylphosphinsäure, usw.

Bevorzugte Mischungen aus 4 Komponenten sind etwa Ethylen-1,2-bis(ethylphosphinsäure) und Butylen-1,2-bis(ethylphosphinsäure) und Diethylphosphinsäure und Butyl-ethyl-phosphinsäure, usw.

Bevorzugt sind auch solche Mischungen, die aus 98 bis 99,9 Gew.-% Ethylen-1,2-bis(ethylphosphinsäure) und 2 bis 0,1 Gew.-% Diethylphospinsäure bestehen.

Bevorzugt handelt es sich bei dem Synergist um mindestens einen ausdehnungsneutralen Stoff. Der ausdehnungsneutrale Stoff verhindert die Ausdehnung des Polymers oder reduziert diese auf äußerst geringe Werte.

Bevorzugte Mischungen mit einem oder mehreren Synergisten sind solche, die 99 bis 50 Gew.-% Gemische nach mindestens einem der Ansprüche 1 bis 9 und 1 bis 50 Gew.-% Synergist enthalten.

Bevorzugt ist die Verarbeitung des erfindungsgemäßen Gemisches von mindestens einer Diphosphinsäure der Formel (I) und mindestens einer Dialkylphosphinsäure der Formel (II) durch Einmischen in ein Polymersystem.

Das Einmischen erfolgt durch Kneten, Dispergieren und/oder Extrudieren.

Besonders bevorzugt ist die Verarbeitung des erfindungsgemäßen Gemisches von mindestens einer Diphosphinsäure der Formel (I) und mindestens einer Dialkylphosphinsäure der Formel (II) durch Einreaktion in ein Polymersystem. Die Einreaktion ist durch eine resultierende, permanente Bindung zu den Polymersträngen des Polymersystems gekennzeichnet, wodurch das erfindungsgemäße Gemisch von mindestens einer Diphosphinsäure der Formel (I) und mindestens einer Dialkylphosphinsäure der Formel (II) aus dem Polymer nicht herausgelöst werden kann.

Bevorzugt erfolgt die Verwendung des erfindungsgemäßen Gemisches von mindestens einer Diphosphinsäure der Formel (I) und mindestens einer Dialkylphosphinsäure der Formel (II) auch durch additive Einarbeitung in ein Polymersystem.

Die erfindungsgemäßen Gemische von mindestens einer Diphosphinsäure der Formel (I) und mindestens einer Dialkylphosphinsäure der Formel (II) können mit weiteren Flammschutzmitteln und weiteren Synergisten eingesetzt werden. Zu den weiteren Flammschutzmitteln gehören beispielsweise Phosphorverbindungen wie Phosphinate, Phosphonate, Phosphate, Phosphonsäuren, Phosphinsäuren, Phosphorsäuren, Phosphane, Phosphanoxide, Phosphoroxide und andere.

Geeignete Polymer-Additive für flammgeschützte Polymerformmassen und Polymerformkörper sind UV-Absorber, Lichtschutzmittel, Gleitmittel, Farbmittel, Antistatika, Nukleierungsmittel, Füllstoffe, Synergisten, Verstärkungsmittel und andere.

Bevorzugt stammen die Polymersysteme aus der Gruppe der thermoplastischen Polymere wie Polyamid, Polyester oder Polystyrol und/oder der duroplastischen Polymere.

Besonders bevorzugt handelt es sich bei den duroplastischen Polymeren um Epoxidharze.

Besonders bevorzugt handelt es sich bei den duroplastischen Polymeren um Epoxidharze, die mit Phenolen und/oder Dicyandiamid [allgemeiner: Phenolderivaten (Resole); Alkohole und Amine, insbesondere Phenolderivate und Dicyandiamid] gehärtet sind.

Besonders bevorzugt handelt es sich bei den duroplastischen Polymeren um Epoxidharze, die mit Phenolen und/oder Dicyandiamid und/oder einem Katalysator gehärtet sind.

Bevorzugt handelt es sich bei den Katalysatoren um Imidazolverbindungen.

Bevorzugt handelt es sich bei den Epoxidharzen um Polyepoxidverbindungen.

Bevorzugt stammen die Epoxidharze aus der Gruppe der Novolacke und der Bisphenol-A-Harze.

Bevorzugt handelt es sich bei den Polymeren um Polymere von Mono- und Diolefinen, beispielsweise Polypropylen, Polyisobutylen, Polybuten-1, Poly-4-methyl-penten-1, Polyisopren oder Polybutadien sowie Polymerisate von Cycloolefinen wie z. B. von Cyclopenten oder Norbornen; ferner Polyethylen (das gegebenenfalls vernetzt sein kann), z. B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), verzweigtes Polyethylen niederer Dichte (VLDPE), sowie Mischungen davon.

Bevorzugt handelt es sich bei den Polymeren um Copolymere von Mono- und Diolefinen untereinander oder mit anderen Vinylmonomeren, wie z. B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere und deren Copolymere mit Kohlenstoffmonoxid, oder Ethylen-Acrylsäure-Copolymere und deren Salze (lonomere), sowie Terpolymere von Ethylen mit Propylen und einem Dien, wie Hexadien, Dicyclopentadien oder Ethylidennorbornen; ferner Mischungen solcher Copolymere untereinander, z. B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z. B. Polyamiden.

Bevorzugt handelt es sich bei den Polymeren um Kohlenwasserstoffharze (z. B. C₅-C₉) inklusive hydrierte Modifikationen davon (z. B. Klebrigmacherharze) und Mischungen von Polyalkylenen und Stärke.

Bevorzugt handelt es sich bei den Polymeren um Polystyrol (Polystyrol® 143E (BASF), Poly-(p-methylstyrol), Poly-(alpha-methylstyrol).

Bevorzugt handelt es sich bei den Polymeren um Copolymere von Styrol oder alpha-Methylstyrol mit Dienen oder Acrylderivaten, wie z. B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z. B. einem Polyacrylat, einem Dien-Polymeren oder einem Ethylen-Propylen-Dien-Terpolymeren; sowie Block-Copolymere des Styrols, wie z. B. Styrol-Butadien-Styrol, Styrol-Isopren-Styrol, Styrol-Ethylen/Butylen-Styrol oder Styrol-Ethylen/Propylen-Styrol.

Bevorzugt handelt es sich bei den Polymeren um Pfropfcopolymere von Styrol oder alpha-Methylstyrol, wie z. B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen, wie sie z. B. als sogenannte ABS-, MBS-, ASA- oder AES-Polymere bekannt sind.

Bevorzugt handelt es sich bei den Polymeren um halogenhaltige Polymere, wie z. B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z. B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

Bevorzugt handelt es sich bei den Polymeren um Polymere, die sich von alpha-, beta-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile und Copolymere der genannten Monomeren untereinander oder mit anderen ungesättigten Monomeren, wie z. B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

Bevorzugt handelt es sich bei den Polymeren um Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit Olefinen.

Bevorzugt handelt es sich bei den Polymeren um Homo- und Copolymere von cyclischen Ethern, wie Polyalkylenglykole, Polyethylenoxyd, Polypropylenoxyd oder deren Copolymere mit Bisglycidylethern.

Bevorzugt handelt es sich bei den Polymeren um Polyacetale, wie Polyoxymethylen, sowie solche Polyoxymethylene, die Comonomere, wie z. B. Ethylenoxid, enthalten; Polyacetale, die mit thermoplastischen Polyurethanen, Acrylaten oder MBS modifiziert sind.

Bevorzugt handelt es sich bei den Polymeren um Polyphenylenoxide und -sulfide und deren Mischungen mit Styrolpolymeren oder Polyamiden.

Bevorzugt handelt es sich bei den Polymeren um Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

Bevorzugt handelt es sich bei den Polymeren um Polyamide und Copolyamide, die sich von Diaminen und Dicarbonsäuren und/oder von Aminocarbonsäuren oder den entsprechenden Lactamen ableiten, wie Polyamid 2/12, Polyamid 4 (Poly-4-aminobuttersäure, Nylon® 4, Fa. DuPont), Polyamid 4/6 (Poly(tetramethylen-adipamid), Poly-(tetramethylen-adipinsäurediamid),
Nylon® 4/6, Fa. DuPont), Polyamid 6 (Polycaprolactam, Poly-6-aminohexansäure, Nylon® 6, Fa. DuPont, Akulon K122, Fa. DSM; Zytel® 7301, Fa. DuPont; Durethan® B 29, Fa. Bayer), Polyamid 6/6 ((Poly(N,N'-hexamethyleneadipinediamid), Nylon® 6/6 , Fa. DuPont, Zytel® 101, Fa. DuPont; Durethan A30, Durethan® AKV, Durethan® AM, Fa. Bayer; Ultramid® A3, Fa BASF), Polyamid 6/9 (Poly(hexamethylen nonanediamid), Nylon® 6/9 , Fa. DuPont), Polyamid 6/10 (Poly(hexamethylen sebacamid), Nylon® 6/10 , Fa. DuPont), Polyamid 6/12 (Poly(hexamethylendodecanediamid), Nylon® 6/12 , Fa. DuPont), Polyamid 6/66 (Poly(hexamethylenadipamid-co-caprolactam), Nylon® 6/66 , Fa. DuPont), Polyamid 7 (Poly-7-aminoheptansäure, Nylon® 7, Fa. DuPont), Polyamid 7,7 (Polyheptamethylenpimelamid, Nylon® 7,7, Fa. DuPont), Polyamid 8 (Poly-8-aminooctansäure, Nylon® 8, Fa. DuPont), Polyamid 8,8 (Polyoctamethylensuberamid, Nylon® 8,8, Fa. DuPont), Polyamid 9 (Poly-9-aminononansäure, Nylon® 9, Fa. DuPont), Polyamid 9,9 (Polynonamethylenazelamid, Nylon® 9,9, Fa. DuPont), Polyamid 10 (Poly-10-amino-decansäure, Nylon® 10, Fa. DuPont), Polyamid 10,9 (Poly(decamethylenazelamid), Nylon® 10,9, Fa. DuPont), Polyamid 10,10 (Polydecamethylensebacamid, Nylon® 10,10, Fa. DuPont), Polyamid 11 (Poly-11-aminoundecansäure, Nylon® 11, Fa. DuPont), Polyamid 12 (Polylauryllactam, Nylon® 12 , Fa. DuPont, Grillamid® L20, Fa. Ems Chemie), aromatische Polyamide ausgehend von m-Xylol, Diamin und Adipinsäure; Polyamide, hergestellt aus Hexamethylendiamin und Iso- und/oder Terephthalsäure (Polyhexamethylenisophthalamid, Polyhexamethylenterephthalamid) und gegebenenfalls einem Elastomer als Modifikator, z. B. Poly-2,4,4-trimethylhexamethylenterephthalamid oder Poly-m-phenylenisophthalamid. Blockcopolymere der vorstehend genannten Polyamide mit Polyolefinen, Olefin-Copolymeren, Ionomeren oder chemisch gebundenen oder gepfropften Elastomeren; oder mit Polyethern, wie z. B. mit Polyethylenglykol, Polypropylenglykol oder Polytetramethylenglykol. Ferner mit EPDM (Ethylen-Propylen-Dien-Kautschuk) oder ABS (Acrylnitril-Butadien-Styrol) modifizierte Polyamide oder Copolyamide; sowie während der Verarbeitung kondensierte Polyamide ("RIM-Polyamidsysteme").

Bevorzugt handelt es sich bei den Polymeren um Polyharnstoffe, Polyimide, Polyamidimide, Polyetherimide, Polyesterimide, Polyhydantoine und Polybenzimidazole.

Bevorzugt handelt es sich bei den Polymeren um Polyester, die sich von Dicarbonsäuren und Dialkoholen und/oder von Hydroxycarbonsäuren oder den entsprechenden Lactonen ableiten, wie Polyethylenterephthalat, Polybutylenterephthalat (Celanex® 2500, Celanex® 2002, Fa Celanese; Ultradur®, Fa. BASF), Poly-1,4-dimethylolcyclohexanterephthalat, Polyhydroxybenzoate, sowie Block-Polyetherester, die sich von Polyethern mit Hydroxylendgruppen ableiten; ferner mit Polycarbonaten oder MBS modifizierte Polyester.

Bevorzugt handelt es sich bei den Polymeren um Polycarbonate und Polyestercarbonate.

Bevorzugt handelt es sich bei den Polymeren um Polysulfone, Polyethersulfone und Polyetherketone.

Bevorzugt handelt es sich bei den Polymeren um vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

Bevorzugt handelt es sich bei den Polymeren um trocknende und nicht-trocknende Alkydharze.

Bevorzugt handelt es sich bei den Polymeren um ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

Bevorzugt handelt es sich bei den Polymeren um vernetzbare Acrylharze, die sich von substituierten Acrylsäureestern ableiten, wie z. B. von Epoxyacrylaten, Urethanacrylaten oder Polyesteracrylaten.

Bevorzugt handelt es sich bei den Polymeren um Alkydharze, Polyesterharze und Acrylatharze, die mit Melaminharzen, Harnstoffharzen, Isocyanaten, Isocyanuraten, Polyisocyanaten oder Epoxidharzen vernetzt sind.

Bevorzugt handelt es sich bei den Polymeren um vernetzte Epoxidharze, die sich von aliphatischen, cycloaliphatischen, heterocyclischen oder aromatischen Glycidylverbindungen ableiten, z. B. Produkte von Bisphenol-A-diglycidylethern, Bisphenol-F-diglycidylethern, die mittels üblichen Härtern wie z. B. Anhydriden oder Aminen mit oder ohne Beschleunigern vernetzt werden.

Bevorzugt handelt es sich bei den Polymeren um Mischungen (Polyblends) der vorgenannten Polymeren, wie z. B. PP/EPDM (Polypropylen/ Ethylen-Propylen-Dien-Kautschuk), Polyamid/EPDM oder ABS (Polyamid/Ethylen-Propylen-DienKautschuk oder Acrylnitril-Butadien-Styrol), PVC/EVA (Polyvinylchlorid/ Ethylenvinylacetat), PVC/ABS (Polyvinylchlorid/Acrylnitril-Butadien-Styrol), PVC/MBS (Polyvinylchlorid/ Methacrylat-Butadien-Styrol), PC/ABS (Polycarbonat/Acrylnitril-Butadien-Styrol), PBTP/ABS (Polybutylenterephthalat /Acrylnitril-Butadien-Styrol), PC/ASA (Polycarbonat/Acrylester-Styrol-Acrylnitril), PC/PBT (Polycarbonat/Polybutylen-terephthalat), PVC/CPE (Polyvinylchlorid/chloriertes Polyethylen), PVC/Acrylate (Polyvinylchlorid/Acrylate, POM/thermoplastisches PUR (Polyoxymethylen / thermoplastisches Polyurethan), PC/thermoplastisches PUR (Polycarbonat / thermoplastisches Polyurethan), POM/Acrylat (Polyoxymethylen/Acrylat), POM/MBS (Polyoxymethylen/ Methacrylat-Butadien-Styrol), PPO/HIPS (Polyphenylenoxid /High impact polystyrol), PPO/PA 6.6 (Polyphenylenoxid /Polyamid 6.6) und Copolymere, PA/HDPE (Polyamid /High Density Polyethylen), PA/PP (Polyamid / Polyethylen), PA/PPO (Polyamid / Polyphenylenoxid), PBT/PC/ABS (Polybutylenterephthalat / Polycarbonat / Acrylnitril-Butadien-Styrol) und/ oder PBT/PET/PC (Polybutylenterephthalat / Polyethylenterephthalat / Polycarbonat).

Die Polymere können lasermarkierbar sein.

Bevorzugt weist die hergestellte Formmasse eine rechteckige Form mit regelmäßiger oder unregelmäßiger Grundfläche, Würfelform, Quaderform, Kissenform, Prismenform auf.

Die Erfindung wird durch die nachstehenden Beispiele erläutert.

Herstellung, Verarbeitung und Prüfung von flammgeschützten Polymerformmassen und flammgeschützten Polymerformkörpern.

Die Flammschutzkomponenten werden mit dem Polymergranulat und evtl. Additiven vermischt und auf einem Doppelschnecken-Extruder (Typ Leistritz LSM® 30/34) bei Temperaturen von 230 bis 260 °C (PBT-GV) bzw. von 260 bis 280 °C (PA 66-GV) eingearbeitet. Der homogenisierte Polymerstrang wurde abgezogen, im Wasserbad gekühlt und anschließend granuliert.

Nach ausreichender Trocknung wurden die Formmassen auf einer Spritzgießmaschine (Typ Aarburg Allrounder) bei Massetemperaturen von 240 bis 270 °C (PBT-GV) bzw. von 260 bis 290 °C (PA 66-GV) zu Prüfkörpern verarbeitet. Die Prüfkörper werden anhand des UL 94-Tests (Underwriter Laboratories) auf Flammwidrigkeit (Flammschutz) geprüft und klassifiziert.

An Prüfkörpern aus jeder Mischung wurden die Brandklasse UL 94 an Probekörpern der Dicke 1,5 mm bestimmt.

Nach UL 94 ergeben sich folgende Brandklassen:
V-0: Kein Nachbrennen länger als 10 sec., Summe der Nachbrennzeiten bei 10 Beflammungen nicht größer als 50 sec., kein brennendes Abtropfen, kein vollständiges Abbrennen der Probe, kein Nachglühen der Proben länger als 30 sec. nach Beflammungsende.
V-1: Kein Nachbrennen länger als 30 sec. nach Beflammungsende, Summe der Nachbrennzeiten bei 10 Beflammungen nicht größer als 250 sec., kein Nachglühen der Proben länger als 60 sec. nach Beflammungsende, übrige Kriterien wie bei V-0.
V-2: Zündung der Watte durch brennendes Abtropfen, übrige Kriterien wie bei V-1.

Nicht klassifizierbar (nkl): Erfüllt nicht die Brandklasse V-2.

Bei einigen untersuchten Proben wurde außerdem der LOI-Wert gemessen. Der LOI-Wert (Limiting Oxygen Index) wird nach ISO 4589 bestimmt. Nach ISO 4589 entspricht der LOI der geringsten Sauerstoffkonzentration in Volumen-prozent, die in einer Mischung von Sauerstoff und Stickstoff gerade noch die Verbrennung des Kunststoffs unterhält. Je höher der LOI-Wert, desto schwerer entflammbar ist das geprüfte Material.

| | | |
|---|---|---|
| LOI | 23 | brennbar |
| LOI | 24-28 | bedingt brennbar |
| LOI | 29-35 | flammwidrig |
| LOI | >36 | besonders flammwidrig |

Eingesetzte Chemikalien und Abkürzungen:

| | |
|---|---|
| Phenolnovolak: | Bakelite® PF 0790, Fa. Hexion |
| Initiator: | Vazo® 67, Fa. DuPont |

Grundsätzlich wird das erfindungsgemäße Verfahren so ausgeführt, dass die Reaktionsmischung unter den gegebenen Reaktionsbedingungen einem relativ hohen Acetylenstrom von mind. 12 l/h, bevorzugt mind. 18 l/h ausgesetzt wird. Nachdem das Acetylen bis zur genügenden Umsetzung durch die Reaktionslösung geleitet wurde und eine ausreichende Nachreaktionszeit erfolgte, wird die Acetylenzufuhr abgestellt und die Aufarbeitung unter InertgasAtmosphäre, bevorzugt Stickstoff durchgeführt. Dazu wird das Reaktionsgemisch bevorzugt mit Stickstoff aus der Apparatur getrieben und nach Abkühlen des Reaktionsgemisches der gebildetes Feststoff abgesaugt, unter Stickstoffatmosphäre mit einem Lösungsmittel redispergiert, gewaschen und für mehrere Stunden im Vakuumtrockenschrank bei 80 bis 180 °C getrocknet.

### Beispiel 1 Herstellung von Ethylphosphinsäure

Bei Raumtemperatur werden in einem Dreihalskolben mit Rührer und Intensivkühler 5852 g Tetrahydrofuran vorgelegt und unter Rühren und Durchleiten von Stickstoff "entgast" und alle weiteren Reaktionen unter Stickstoff ausgeführt. Dann werden 70 mg Tris(dibenzyliden-aceton)dipalladium und 95 mg 4,5-Bis(diphenylphosphino)-9,9-dimethylxanthen hinzugegeben und weitere 15 Minuten gerührt, dann 198 g Phosphinsäure in 198 g Wasser zugegeben. Die Reaktionslösung wird in einen 2 I-Büchi-Reaktor überführt. Unter Rühren des Reaktionsgemisches wird der Reaktor mit 2,5 bar Ethylen beschickt und das Reaktionsgemisch auf 80 °C geheizt. Nach einer Ethylenaufnahme von 56 g wird auf Raumtemperatur abgekühlt und freies Ethylen unter Verbrennung abgelassen.

Das Reaktionsgemisch wird am Rotationsverdampfer bei maximal 60 °C und 350 - 10 mbar vom Lösungsmittel befreit. Der Rückstand wird mit 300 g VE-Wasser versetzt und 1 Stunde bei Raumtemperatur unter Stickstoffatmosphäre gerührt. Der entstandene Rückstand wird filtriert und das Filtrat mit 200 ml Toluol extrahiert. Die wässrige Phase wird am Rotationsverdampfer bei maximal 60 °C und 250 - 10 mbar vom Lösungsmittel befreit.
31P-NMR(D₂O, gekoppelt): Dublet von Multiplet, 36.7 ppm; Ethylphosphinsäure.

### Beispiel 2

0,5 mol Ethylphosphinsäure (hergestellt nach Beispiel 1) werden in n-Butanol als Lösungsmittel vorgelegt und unter Rühren 30 Minuten mit einem Stickstoff-Gasstrom inertisiert und auf 80 °C erwärmt. Es wird Acetylen mit 18 l/h durch die Reaktionslösung geleitet und 0,2 mol-% Initiator über 3 Stunden zu dosiert und noch etwas nachregiert. Danach wird das Acetylen mit Stickstoff aus der Apparatur ausgetrieben. Nach Abkühlen des Reaktionsgemisches wird der gebildete Feststoff abgesaugt und mit Aceton redispergiert, gewaschen und 4 Stunden im Vakuumtrockenschrank bei 100 °C getrocknet.
Es wird in einer Ausbeute von 65 %, 34,8 g eines Gemisches aus Ethylen-1,2-bis(ethylphosphinsäure) (99,9 Gew.-%) und Diethylphosphinsäure (0,1 Gew.-%) erhalten.

### Beispiel 3

0,5 mol Ethylphosphinsäure (hergestellt nach Beispiel 1) werden in n-Butanol vorgelegt und unter Rühren 30 Minuten mit einem Stickstoff-Gasstrom inertisiert und auf 85 °C erwärmt. Es wird Acetylen mit 20 l/h durch die Reaktionslösung geleitet und 0,2 mol-% Initiator über 2,5 Stunden zudosiert. Nach einer Nachreaktionszeit von 30 Minuten wird die Acetylenzufuhr abgestellt und Acetylen mit Stickstoff aus der Apparatur ausgetrieben. Nach Abkühlen des Reaktionsgemisches wird der gebildete Feststoff abgesaugt und mit 75 g Aceton redispergiert, gewaschen und 4 Stunden im Vakuumtrockenschrank bei 100 °C getrocknet.
Es wird in einer Ausbeute von 65 %, 34,9 g eines Gemisches aus Ethylen-1,2-bis(ethylphosphinsäure) (98 Gew.- %) und Diethylphosphinsäure (2 Gew.-%) erhalten.

### Beispiel 4

0,5 mol Ethylphosphinsäure (hergestellt nach Beispiel 1) werden in n-Butanol als Lösungsmittel vorgelegt und unter Rühren 30 Minuten mit einem Stickstoff-Gasstrom inertisiert und auf 90 °C erwärmt. Es wird Acetylen mit 30 l/h durch die Reaktionslösung geleitet und 0,2 mol-% Initiator über 2 Stunden zudosiert. Nach einer Nachreaktionszeit von 30 Minuten wird die Acetylenzufuhr abgestellt und Acetylen mit Stickstoff aus der Apparatur ausgetrieben. Nach Abkühlen des Reaktionsgemisches wird der gebildete Feststoff abgesaugt und mit 75 g Aceton redispergiert, gewaschen und 4 Stunden im Vakuumtrockenschrank bei 100 °C getrocknet.
Es wird in einer Ausbeute von 63 %, 34,2 g eines Gemisches aus Ethylen-1,2-bis(ethylphosphinsäure) (90 Gew.- %) und Diethylphosphinsäure (10 Gew.-%) erhalten.

### Beispiel 5

Dem nach Beispiel 2 synthetisiertem Stoffgemisch aus Ethylen-1,2-bis(ethylphosphinsäure) (99,9 Gew.-%) und Diethylphosphinsäure (0,1 Gew.-%) werden 21,5 g reine Diethylphosphinsäure zugegeben, so dass ein Gemisch aus 60 Gew.-% Ethylen-1,2-bis(ethylphosphinsäure) und 40 Gew.-% Diethylphosphinsäure erhalten wird. Die vorgenannte Diethylphosphinsäure wird nach dem Beispiel 8 der EP-B-1544205 hergestellt, in dem nach dem dortigen Schritt "Zugabe der Schwefelsäure" destilliert wird, um die reine Diethylphosphinsäure zu erhalten, es erfolgt also keine Umsetzung zu einem Salz der Diethylphosphinsäure.

### Beispiel 6

Dem nach Beispiel 2 synthetisiertem Stoffgemisch aus Ethylen-1,2-bis(ethylphosphinsäure) (99,9 Gew.-%) und Diethylphosphinsäure (0,1 Gew.-%) wird 34,8 g reine Diethylphosphinsäure zugegeben, so dass ein Gemisch aus 50 Gew.-% Ethylen-1,2-bis(ethylphosphinsäure) und 50 Gew.- % Diethylphosphinsäure erhalten wird. Die vorgenannte Diethylphosphinsäure wird nach dem Beispiel 8 der EP-B-1544205 hergestellt, in dem nach dem dortigen Schritt "Zugabe der Schwefelsäure" destilliert wird, um die reine Diethylphosphinsäure zu erhalten, es erfolgt also keine Umsetzung zu einem Salz der Diethylphosphinsäure.

### Vorschrift zur Herstellung von Polymerformkörpern:

### Herstellung Epoxidharz Probekörper

100 Teile des phosphormodifizierten Epoxidharzes werden mit einem entsprechenden OH-Äquivalent Phenolharz gemischt und auf 150 °C aufgeheizt. Hierbei verflüssigen sich die Komponenten. Man rührt langsam bis eine homogene Mischung entsteht und lässt auf 130 °C abkühlen. Nun gibt man 0,03 Teile 2-Phenylimidazol zu und rührt nochmals 5 - 10 min. Im Anschluss wird der Ansatz warm in eine Schale gegossen, die für 2 h bei 140 °C und 2 h bei 200 °C ausgehärtet wird.

### Herstellung Epoxidharz Laminat

In 63 Teilen Aceton und 27 Teilen Dowanol PM werden 100 Teile phosphormodifiziertes Epoxidharz gegeben und mit der entsprechenden Menge Phenolharz versetzt. Man lässt den Ansatz 30 min rühren und gibt nun 2-Phenylimidazol zu. Die Menge Phenylimidazol ist so zu wählen, dass die Gelzeit bei 240 sec liegt. Im Anschluss ist die Zielviskosität (Auslaufbecher) durch weitere Zugabe von Lösungsmittel einzustellen. Danach wird der Ansatz über ein 400 µm Sieb filtriert um überschüssige Harzpartikel zu entfernen. Nun wird das Glasgewebe (Typ 7628, 203 g/m²) in die Lösung eingetaucht, bis eine vollständige Benetzung des Gewebes stattgefunden hat. Die Probe wird vorsichtig aus der Mischung gezogen und überschüssiges Harz entfernt. Im Anschluss wird die Probe stufenweise im Trockenschrank für kurze Zeit bei Temperaturen bis auf 165 °C ausgehärtet, so dass das Lösungsmittel entfernt wird der Prepreg vorvernetzt ist. Die Gelzeit dieser Prepregs ist zu kontrollieren. Acht Prepegs werden geschichtet und in einer Heizpresse ausgehärtet. Der Harzanteil der ausgehärteten Laminate beträgt 30 - 50 %.

Von dem hergestellten Formkörper, einem Laminat, wird die thermische Ausdehnung nach ASTM E831-06 bestimmt.

### Beispiel 7 (Vergleich)

Nach der allgemeinen Vorschrift zur Herstellung eines Polymerformkörpers wird mit 100 % eines Bisphenol-A Harzes ein Laminat hergestellt.

### Beispiel 8

Reine Ethylen-1,2-bis(ethylphosphinsäure) wird nach Beispiel 2 und anschließendem Waschen des Produkts mit organischen Lösungsmitteln erhalten. Nach der allgemeinen Vorschrift zur Herstellung eines Polymerformkörpers wird mit einer Zusammensetzung aus 90 Gew.-% Bisphenol-A Harz mit Härter und Katalysator und 10 Gew.-% Ethylen-1,2-bis(ethylphosphinsäure) ein Formkörper hergestellt.

### Beispiel 9

Zunächst wird Diethylphosphinsäure nach dem Beispiel 8 der EP-B-1544205 hergestellt, in dem nach der Zugabe der Schwefelsäure anschließend destilliert wird, um eine reine Diethylphosphinsäure zu erhalten.

Nach der allgemeinen Vorschrift zur Herstellung eines Polymerformkörpers wird mit einer Zusammensetzung aus 90 Gew.-% Bisphenol-A Harz mit Härter und Katalysator und 10 Gew.-% Diethylphosphinsäure ein Formkörper hergestellt.

### Beispiel 10

Nach der allgemeinen Vorschrift zur Herstellung eines Polymerformkörpers wird mit einer Zusammensetzung aus 90 Gew.-% Bisphenol-A Harz mit Härter und Katalysator und 10 Gew.-% des erfindungsgemäßen Gemisches aus Ethylen-1,2-bis(ethylphosphinsäure) und Diethylphosphinsäure nach Beispiel 2 ein Formkörper hergestellt.

### Beispiel 11

Nach der allgemeinen Vorschrift zur Herstellung eines Polymerformkörpers wird mit einer Zusammensetzung aus 90 Gew.-% Bisphenol-A Harz mit Härter und Katalysator und 10 Gew.-% des erfindungsgemäßen Gemisches aus Ethylen-1,2-bis(ethylphosphinsäure) und Diethylphosphinsäure nach Beispiel 3 ein Formkörper hergestellt.

### Beispiel 12

Nach der allgemeinen Vorschrift zur Herstellung eines Polymerformkörpers wird mit einer Zusammensetzung aus 90 Gew.-% Bisphenol-A Harz mit Härter und Katalysator und 10 Gew.-% des erfindungsgemäßen Gemisches aus Ethylen-1,2-bis(ethylphosphinsäure) und Diethylphosphinsäure nach Beispiel 4 ein Formkörper hergestellt.

### Beispiel 13

Nach der allgemeinen Vorschrift zur Herstellung eines Polymerformkörpers wird mit einer Zusammensetzung aus 90 Gew.-% Bisphenol-A Harz mit Härter und Katalysator und 10 Gew.-% des erfindungsgemäßen Gemisches aus Ethylen-1,2-bis(ethylphosphinsäure) und Diethylphosphinsäure nach Beispiel 5 ein Formkörper hergestellt.

### Beispiel 14

Nach der allgemeinen Vorschrift zur Herstellung eines Polymerformkörpers wird mit einer Zusammensetzung aus 90 Gew.-% Bisphenol-A Harz mit Härter und Katalysator und 10 Gew.-% des erfindungsgemäßen Gemisches aus Ethylen-1,2-bis(ethylphosphinsäure) und Diethylphosphinsäure nach Beispiel 6 ein Formkörper hergestellt.

**Tabelle: Zusammensetzungen des Polymergemisches und der eingesetzten Gemische sowie Messergebnisse**

| Beispiel | Zusammensetzung Polymersystem / Stoffgemisch | Gemisch Ethylen-1,2-bis (Ethylphosphinsäure) / | Thermischer Ausdehnungskoefffizient 0° - 100° [ppm/°C] | | |
|---|---|---|---|---|---|
| | [Gew.-%] | Diethylphosphinsäure [Gew.-%] | Z | X | Y |
| 7 | 100 : 0 | | 69 | 20 | 7 |
| 8 | 90 : 10 | 100 : 0 | 68 | 20 | 7 |
| 9 | 90 : 10 | 0 : 100 | 70 | 22 | 7 |
| 10 | 90:10 | 99,9 : 0,1 | 65 | 18 | 5 |
| 11 | 90: 10 | 98 : 2 | 62 | 16 | 5 |
| 12 | 90:10 | 90 : 10 | 60 | 16 | 5 |
| 13 | 90:10 | 60:40 | 57 | 13 | 4 |
| 14 | 90:10 | 50:50 | 56 | 13 | 4 |

Im Vergleich zum reinen Laminat (Beispiel 7) nehmen die Werte des Laminats mit dem erfindungsgemäßen Gemisch aus Ethylen-1,2-bis(ethylphosphinsäure) und Diethylphosphinsäure ab, die thermische Ausdehnung ist somit sehr gering. Eine Erhöhung des Diethylphosphinsäureanteils bewirkt eine weitere Verbesserung. Im Vergleich zum Stand der Technik (Beispiel 7) zeigen die erfindungsgemäßen Mischungen geringere Werte für den thermischen Ausdehnungskoeffizienten, d. h. dass die erfindungsgemäßen Produkte zu einer geringeren Ausdehnung der hergestellten Formkörper führen und somit den Anforderungen an die Maßhaltigkeit genügen.

### Beispiel 15

### Herstellung von Polymerformkörpern auf Polyesterbasis:

### a) Herstellung von Phosphor-modifiziertem Polyethylenterephthalat

1000 g Dimethylterephthalat werden mit 720 ml Ethylenglykol und 230 mg Mn(OCOCH₃)₄ * 4H₂O bei Temperaturen von 170 - 220 °C unter einer Stickstoffatmosphäre umgeestert. Nach der Abscheidung des Methanols werden 17,2 g des erfindungsgemäßen Gemisches aus Beispiel 4 bei 220 °C dazugegeben und nach Zugabe von 350 mg Sb₂O₃ das Reaktionsgefäß weiter auf 250 °C erwärmt und gleichzeitig ein Vakuum angelegt. Die Polymerisation erfolgt bei 0,2 mm Hg und 287 °C binnen 2 Stunden. Das erhaltene Produkt hat einen Schmelzpunkt von 240 - 244 °C, einen Phosphorgehalt von 0,5 % und liegt als Granulat vor.

### b) Herstellung von Kunststoff-Formkörpern

Das so hergestellte Polymergranulat wird mit evtl. Additiven vermischt und auf einem Doppelschnecken-Extruder (Typ Leistritz LSM 30/34) bei Temperaturen von 250 bis 290 °C (PET-GV) eingearbeitet. Der homogenisierte Polymerstrang wurde abgezogen, im Wasserbad gekühlt und anschließend granuliert. Nach ausreichender Trocknung wurden die Formmassen auf einer Spritzgießmaschine (Typ Aarburg Allrounder) bei Massetemperaturen von 250 bis 300 °C (PET-GV) zu Prüfkörpern verarbeitet.

Die Brandklasse UL 94 und der LOI wurde an Prüfkörpern der Dicke 1,6 mm bestimmt. Formkörper der Dicke 1,6 mm ergeben einen V-0 und einen LOI von 28 %.

## Patentansprüche

1. Gemische von mindestens einer Diphosphinsäure der Formel (I) 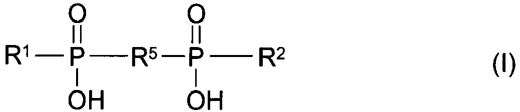 worin
R¹, R² gleich oder verschieden sind und H, Ethyl, n-Propyl, iso-Propyl, n-Butyl, iso-Butyl, tert.-Butyl, n-Pentyl, iso-Pentyl, n-Hexyl und/oder iso-Hexyl
R⁵ Ethylen, Butylen, Hexylen oder Octylen bedeuten
mit mindestens einer Dialkylphosphinsäure der Formel (II) 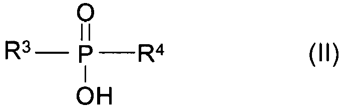 worin
R³, R⁴ gleich oder verschieden sind und unabhängig von R¹ und R² Ethyl, n-Propyl, iso-Propyl, n-Butyl, iso-Butyl, tert.-Butyl, n-Pentyl, iso-Pentyl, n-Hexyl und/oder iso-Hexyl bedeuten,
wobei die Gemische 0,1 bis 99,9 Gew.-% Dialkylphosphinsäure der Formel (I) und 99,9 bis 0,1 Gew.-% Dialkylphosphinsäure der Formel (II) enthalten.

2. Gemische nach Anspruch 1, **dadurch gekennzeichnet, dass** R¹, R², R³ und R⁴ gleich oder verschieden sind und Ethyl und/oder Butyl und R⁵ Ethylen oder Butylen bedeutet.

3. Gemische nach Anspruch 1 oder 2, **dadurch gekennzeichnet, dass** sie 60 bis 99,9 Gew.-% Diphosphinsäure der Formel (I) und 40 bis 0,1 Gew.-% Dialkylphosphinsäure der Formel (II) enthalten.

4. Gemische nach einem oder mehreren der Ansprüche 1 bis 3, **dadurch gekennzeichnet, dass** sie 80 bis 99,9 Gew.-% Diphosphinsäure der Formel (I) und 20 bis 0,1 Gew.-% Dialkylphosphinsäure der Formel (II) enthalten.

5. Gemische nach einem oder mehreren der Ansprüche 1 bis 4, **dadurch gekennzeichnet, dass** sie 90 bis 99,9 Gew.-% Diphosphinsäure der Formel (I) und 10 bis 0,1 Gew.-% Dialkylphosphinsäure der Formel (II) enthalten.

6. Gemische nach einem oder mehreren der Ansprüche 1 bis 5, **dadurch gekennzeichnet, dass** sie 95 bis 99,9 Gew.-% Diphosphinsäure der Formel (I) und 5 bis 0,1 Gew.-% Dialkylphosphinsäure der Formel (II) enthalten.

7. Gemische nach einem oder mehreren der Ansprüche 1 bis 6, **dadurch gekennzeichnet, dass** sie 98 bis 99,9 Gew.-% Diphosphinsäure der Formel (I) und 2 bis 0,1 Gew.-% Dialkylphosphinsäure der Formel (II) enthalten.

8. Gemische nach einem oder mehreren der Ansprüche 1 bis 7, **dadurch gekennzeichnet, dass** es sich bei der Diphosphinsäure um Ethylen-1,2-bis(ethylphosphinsäure), Ethylen-1,2-bis(propylphosphinsäure), Ethylen-1,2-bis(butylphosphinsäure), Ethylen-1,2-bis(pentylphosphinsäure), Ethylen-1,2-bis(hexylphosphinsäure), Butan-1,2-bis(ethylphosphinsäure), Butan-1,2-bis(propylphosphinsäure), Butan-1,2-bis(butylphosphinsäure), Butan-1,2-bis(pentylphosphinsäure), Butan-1,2-bis(hexylphosphinsäure), Hexan-1,2-bis(ethylphosphinsäure), Hexan-1,2-bis(propylphosphinsäure), Hexan-1,2-bis(butylphosphinsäure), Hexan-1,2-bis(pentylphosphinsäure) oder Hexan-1,2-bis(hexylphosphinsäure) und bei der Dialkylphosphinsäure um Diethylphosphinsäure, Dipropylphosphinsäure, Dibutylphosphinsäure, Dipentylphosphinsäure oder Dihexylphosphinsäure handelt.

9. Gemische nach einem oder mehreren der Ansprüche 1 bis 8, **dadurch gekennzeichnet, dass** sie 98 bis 99,9 Gew.-% Ethylen-1,2-bis(ethylphosphinsäure) und 2 bis 0,1 Gew.-% Diethylphosphinsäure enthalten.

10. Gemische nach einem oder mehreren der Ansprüche 1 bis 9, **dadurch gekennzeichnet, dass** weiterhin mindestens einen Synergisten enthalten wobei es es sich um eine Stickstoff enthaltende Verbindung wie Melem, Melam, Melon, Melaminborat, Melamincyanurat, Melaminphosphat, Dimelaminphosphat, Pentamelamintriphosphat, Trimelamindiphosphat, Tetrakismelamintriphosphat, Hexakismelaminpentaphosphat, Melamindiphosphat, Melamintetraphosphat, Melaminpyrophosphat, Melaminpolyphosphat, Melampolyphosphat, Melempolyphosphat und/oder Melonpolyphosphat;
um Aluminiumverbindungen wie Aluminiumhydroxid, Halloysite, Saphire-Produkte, Böhmit, Nano-Böhmit;
um Magnesiumverbindungen wie Magnesiumhydroxid;
um Zinnverbindungen wie Zinnoxide;
um Antimonverbindungen wie Antimonoxide;
um Zinkverbindungen wie Zinkoxid, Zinkhydroxid, Zinkoxidhydrat, Zinkcarbonat, Zinkstannat, Zinkhydroxystannat, Zink-Silicat, Zinkphosphat, Zinkborphosphat, Zinkborat und/oder Zinkmolybdat;
um Siliziumverbindungen, wie Silikate und/oder Silikone;
um Phosphorverbindungen wie Phosphinsäuren und ihre Salze, Phosphonsäuren und ihre Salze und/oder Phosphinoxide, Phosphazene und/oder Piperazin(pyro)phosphate;
um Carbodiimide, Piperazine, (Poly-)isocyanate, Styrol-Acryl-Polymere und/oder Carbinylbiscaprolactam;
um stickstoffhaltige Verbindungen aus der Gruppe oligomere Ester des Tris(hydroxyethyl)isocyanurats mit aromatischen Polycarbinsäuren, oder Benzoguanamin, Acetoguanamin, Tris(hydroxyethyl)-isocyanurat, Allantoin, Glycouril, Cyanurate, Cyanurate-Epoxidverbindungen, Harnstoffcyanurat, Dicyanamid, Guanidin, Guanidinphosphat und/oder -sulfat handelt.

11. Gemische nach einem oder mehreren der Ansprüche 1 bis 10, **dadurch gekennzeichnet, dass** sie 99 bis 1 Gew.-% an Gemisch von mindestens einer Diphosphinsäure der Formel (I) und mindestens einer Dialkylphosphinsäure der Formel (II) nach mindestens einem der Ansprüche 1 bis 10 und 1 bis 99 Gew.-% an Synergisten enthalten.

12. Verfahren zur Herstellung der Gemische nach mindestens einem der Ansprüche 1 bis 11, **dadurch gekennzeichnet, dass** eine Phosphinsäurequelle mit einem Alkin in Anwesenheit eines Initiators umgesetzt wird, wobei es sich bei der Phosphinsäurequelle um Ethylphosphinsäure und es sich bei dem Alkin um Acetylen, Methylacetylen, 1-Butin, 1-Hexin, 2-Hexin, 1-Octin, 4-Octin, 1-Butin-4-ol, 2-Butin-1-ol, 3-Butin-1-ol, 5-Hexin1-ol, 1-Octin-3-ol, 1-Pentin, Phenylacetylen, Trimethylsilylacetylen und/oder Diphenylacetylen und es sich bei dem Initiator um einen Radikalinitiator mit einer Stickstoff-Stickstoff- oder einer Sauerstoff-Sauerstoff Bindung handelt und dass die Reaktionstemperatur zwischen 50 und 150 °C beträgt.

13. Verfahren nach Anspruch 12, **dadurch gekennzeichnet, dass** es sich bei dem Radikalinitiator um 2,2'-Azobis(2-amidinopropan)-dihydrochlorid, 2,2'-Azobis(N,N'-dimethylenisobutyramidin)dihydrochlorid, Azobis(isobutyronitril), 4,4'Azobis(4-cyano-pentansäure) und/oder 2,2'Azobis(2-methylbutyronitril) oder um Wasserstoffperoxid, Kaliumoperoxodisulfat, Dibenzoylperoxid, Di-tert.-butylperoxid, Peressigsäure, Diisobutyryl-peroxid, Cumol-peroxineodecanoat, tert.-Butyl-peroxineodecanoat, tert.-Butyl-peroxipivalat, tert.-Amyl-peroxipivalat, Dipropyl-peroxidicarbonat, Dibutyl-peroxidicarbonat, Dimyristyl-peroxidicarbonat, Dilauroyl-peroxid, 1,1,3,3-Tetramethylbutyl-peroxi-2-ethylhexanoat, tert.-Amyl-peroxi-2-ethylhexylcarbonat, tert.-Butyl-peroxiisobutyrat, 1,1-Di-(tert.-butylperoxi)-cyclohexan, tert.-Butyl-peroxibenzoat, tert.-Butyl-peroxiacetat, tert.-Butyl-peroxidiethylacetat, tert.-Butyl-peroxiisopropylcarbonat, 2,2-Di-(tert.-butylperoxi)-butan, tert.-Amyl-hydroperoxid und/oder 2,5-Dimethyl-2,5-di-(tert.-butylperoxi)-hexan handelt.

14. Verfahren nach Anspruch 12 oder 13, **dadurch gekennzeichnet, dass** es sich bei dem Lösungsmittel um gradkettige oder verzweigte Alkane, alkylsubstituierte aromatische Lösungsmittel, mit Wasser nicht oder nur teilweise mischbare Alkohole oder Ether, Wasser und/oder Essigsäure handelt.

15. Verfahren nach Anspruch 14, **dadurch gekennzeichnet, dass** es sich bei dem Alkohol um Methanol, Propanol, i-Butanol und/oder n-Butanol oder Mischungen dieser Alkohole mit Wasser handelt.

16. Verwendung von Gemischen nach mindestens einem der Ansprüche 1 bis 9 als Zwischenprodukt für weitere Synthesen, als Binder, als Vernetzer bzw. Beschleuniger beim Aushärten von Epoxyharzen, Polyurethanen und ungesättigten Polyesterharzen, als Polymerstabilisatoren, als Pflanzenschutzmittel, als Sequestrierungsmittel, als Mineralöl-Additiv, als Korrosionsschutzmittel, in Wasch- und Reinigungsmittelanwendungen und in Elektronikanwendungen.

17. Verwendung von Gemischen nach mindestens einem der Ansprüche 1 bis 11 als Flammschutzmittel, insbesondere als Flammschutzmittel für Klarlacke und Intumeszenzbeschichtungen, als Flammschutzmittel für Holz und andere cellulosehaltige Produkte, als reaktives und/oder nicht reaktives Flammschutzmittel für Polymere, zur Herstellung von flammgeschützten Polymerformmassen, zur Herstellung von flammgeschützten Polymerformkörpern und/oder zum flammhemmend Ausrüsten von Polyester und Cellulose-Rein- und Mischgeweben durch Imprägnierung sowie als Synergist.

18. Flammgeschützte thermoplastische oder duroplastische Polymerformmasse, Polymer-Formkörper, -Filme, -Fäden und -Fasern enthaltend 0,5 bis 50 Gew.-% Gemische nach mindestens einem der Ansprüche 1 bis 11, 50 bis 99,5 Gew.-% thermoplastisches oder duroplastisches Polymer oder Mischungen derselben, 0 bis 55 Gew.-% Additive und 0 bis 55 Gew.-% Füllstoff bzw. Verstärkungsmaterialien, wobei die Summe der Komponenten 100 Gew.-% beträgt.

19. Flammgeschützte thermoplastische oder duroplastische Polymerformmasse, Polymer-Formkörper, -Filme, -Fäden und -Fasern, enthaltend 2 bis 30 Gew.-% Gemische nach mindestens einem der Ansprüche 1 bis 11, 60 bis 94 Gew.-% thermoplastisches oder duroplastisches Polymer oder Mischungen derselben, 2 bis 30 Gew.-% Additive und 2 bis 30 Gew.-% Füllstoff bzw. Verstärkungsmaterialien, wobei die Summe der Komponenten 100 Gew.-% beträgt.

## Claims

1. A mixture of at least one diphosphinic acid of the formula (I) 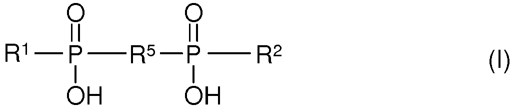 in which
R¹, R² are the same or different and are each H, ethyl, n-propyl, isopropyl, n-butyl, isobutyl, tert-butyl, n-pentyl, isopentyl, n-hexyl and/or isohexyl
R⁵ is ethylene, butylene, hexylene or octylene
with at least one dialkylphosphinic acid of the formula (II) 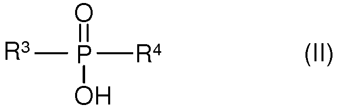 in which
R³, R⁴ are the same or different and, independently of R¹ and R² are each ethyl, n-propyl, isopropyl, n-butyl, isobutyl, tert-butyl, n-pentyl, isopentyl, n-hexyl and/or isohexyl
wherein the mixtures comprise 0.1% to 99.9% by weight of dialkylphosphinic acid of the formula (I) and 99.9% to 0.1% by weight of dialkylphosphinic acid of the formula (II).

2. The mixture as claimed in claim 1, wherein R¹, R², R³ and R⁴ are the same or different and are each ethyl and/or butyl, and R⁵ is ethylene or butylene.

3. The mixture as claimed in claim 1 or 2, which comprises 60 to 99.9% by weight of diphosphinic acid of the formula (I) and 40 to 0.1 % by weight of dialkylphosphinic acid of the formula (II).

4. The mixture as claimed in one or more of claims 1 to 3, which comprises 80 to 99.9% by weight of diphosphinic acid of the formula (I) and 20 to 0.1% by weight of dialkylphosphinic acid of the formula (II).

5. The mixture as claimed in one or more of claims 1 to 4, which comprises 90 to 99.9% by weight of diphosphinic acid of the formula (I) and 10 to 0.1 % by weight of dialkylphosphinic acid of the formula (II).

6. The mixture as claimed in one or more of claims 1 to 5, which comprises 95 to 99.9% by weight of diphosphinic acid of the formula (I) and 5 to 0.1% by weight of dialkylphosphinic acid of the formula (II).

7. The mixture as claimed in one or more of claims 1 to 6, which comprises 98 to 99.9% by weight of diphosphinic acid of the formula (I) and 2 to 0.1% by weight of dialkylphosphinic acid of the formula (II).

8. The mixture as claimed in one or more of claims 1 to 7, wherein the diphosphinic acid is ethylene-1,2-bis(ethylphosphinic acid), ethylene-1,2-bis(propylphosphinic acid), ethylene-1,2-bis(butylphosphinic acid), ethylene-1,2-bis(pentylphosphinic acid), ethylene-1,2-bis(hexylphosphinic acid), butane-1,2-bis(ethylphosphinic acid), butane-1,2-bis(propylphosphinic acid), butane-1,2-bis(butylphosphinic acid), butane-1,2-bis(pentylphosphinic acid), butane-1,2-bis(hexylphosphinic acid), hexane-1,2-bis(ethylphosphinic acid), hexane-1,2-bis(propylphosphinic acid), hexane-1,2-bis(butylphosphinic acid), hexane-1,2-bis(pentylphosphinic acid) or hexane-1,2-bis(hexylphosphinic acid), and the dialkylphosphinic acid is diethylphosphinic acid, dipropylphosphinic acid, dibutylphosphinic acid, dipentylphosphinic acid or dihexylphosphinic acid.

9. The mixture as claimed in one or more of claims 1 to 8, which comprises 98 to 99.9% by weight of ethylene-1,2-bis(ethylphosphinic acid) and 2 to 0.1% by weight of diethylphosphinic acid.

10. The mixture as claimed in one or more of claims 1 to 9, which further comprises at least one synergist, the latter being
a nitrogen-containing compound such as melem, melam, melon, melamine borate, melamine cyanurate, melamine phosphate, dimelamine phosphate, pentamelamine triphosphate, trimelamine diphosphate, tetrakismelamine triphosphate, hexakismelamine pentaphosphate, melamine diphosphate, melamine tetraphosphate, melamine pyrophosphate, melamine polyphosphate, melam polyphosphate, melem polyphosphate and/or melon polyphosphate;
aluminum compounds such as aluminum hydroxide, halloysite, sapphire products, boehmite, nanoboehmite;
magnesium compounds such as magnesium hydroxide;
tin compounds such as tin oxides;
antimony compounds such as antimony oxides;
zinc compounds such as zinc oxide, zinc hydroxide, zinc oxide hydrate, zinc carbonate, zinc stannate, zinc hydroxystannate, zinc silicate, zinc phosphate, zinc borophosphate, zinc borate and/or zinc molybdate;
silicon compounds such as silicates and/or silicones;
phosphorus compounds such as phosphinic acids and salts thereof, phosphonic acids and salts thereof and/or phosphine oxides, phosphazenes and/or piperazine (pyro)phosphates;
carbodiimides, piperazines, (poly)isocyanates, styrene-acrylic polymers and/or carbinylbiscaprolactam;
nitrogen compounds from the group of oligomeric esters of tris(hydroxyethyl) isocyanurate with aromatic polycarboxylic acids, or benzoguanamine, acetoguanamine, tris(hydroxyethyl) isocyanurate, allantoin, glycoluril, cyanurates, cyanurate-epoxide compounds, urea cyanurate, dicyanamide, guanidine, guanidine phosphate and/or sulfate.

11. The mixture as claimed in one or more of claims 1 to 10, which comprises 99 to 1 % by weight of mixture of at least one diphosphinic acid of the formula (I) and at least one dialkylphosphonic acid of the formula (II) as claimed in at least one of claims 1 to 10 and 1 to 99% by weight of synergist.

12. A process for preparing the mixtures as claimed in at least one of claims 1 to 11, which comprises reacting a phosphinic acid source with an alkyne in the presence of an initiator, wherein the phosphinic acid source is ethylphosphinic acid and the alkyne is acetylene, methylacetylene, 1-butyne, 1-hexyne, 2-hexyne, 1-octyne, 4-octyne, 1-butyn-4-ol, 2-butyn-1-ol, 3-butyn-1-ol, 5-hexyn-1-ol, 1-octyn-3-ol, 1-pentyne, phenylacetylene, trimethylsilylacetylene and/or diphenylacetylene and the initiator is a free-radical initiator having a nitrogen-nitrogen or an oxygen-oxygen bond and the reaction temperature is between 50 and 150°C.

13. The process as claimed in claim 12, wherein the free-radical initiator is 2,2'-azobis(2-amidinopropane) dihydrochloride, 2,2'-azobis(N,N'-dimethyleneisobutyramidine) dihydrochloride, azobis(isobutyronitrile), 4,4'-azobis(4-cyanopentanoic acid) and/or 2,2'-azobis(2-methylbutyronitrile) or hydrogen peroxide, potassium peroxodisulfate, dibenzoyl peroxide, di-tert-butyl peroxide, peracetic acid, diisobutyryl peroxide, cumene peroxyneodecanoate, tert-butyl peroxyneodecanoate, tert-butyl peroxypivalate, tert-amyl peroxypivalate, dipropyl peroxydicarbonate, dibutyl peroxydicarbonate, dimyristyl peroxydicarbonate, dilauroyl peroxide, 1,1,3,3-tetramethylbutyl peroxy-2-ethylhexanoate, tert-amyl peroxy-2-ethylhexylcarbonate, tert-butyl peroxyisobutyrate, 1,1-di(tert-butylperoxy)cyclohexane, tert-butyl peroxybenzoate, tert-butyl peroxyacetate, tert-butyl peroxydiethylacetate, tert-butyl peroxyisopropylcarbonate, 2,2-di(tert-butylperoxy)butane, tert-amyl hydroperoxide and/or 2,5-dimethyl-2,5-di(tert-butylperoxy)hexane.

14. The process as claimed in claim 12 or 13, wherein the solvent comprises straight-chain or branched alkanes, alkyl-substituted aromatic solvents, water-immiscible or only partly water-miscible alcohols or ethers, water and/or acetic acid.

15. The process as claimed in claim 14, wherein the alcohol is methanol, propanol, i-butanol and/or n-butanol or comprises mixtures of these alcohols with water.

16. The use of mixtures as claimed in at least one of claims 1 to 7 as an intermediate for further syntheses, as a binder, as a crosslinker or accelerator in the curing of epoxy resins, polyurethanes and unsaturated polyester resins, as polymer stabilizers, as crop protection compositions, as sequestrants, as a mineral oil additive, as an anticorrosive, in washing and cleaning composition applications and in electronics applications.

17. The use of mixtures as claimed in at least one of claims 1 to 11 as a flame retardant, especially as a flame retardant for clearcoats and intumescent coatings, as a flame retardant for wood and other cellulosic products, as a reactive and/or nonreactive flame retardant for polymers, for production of flame-retardant polymer molding compositions, for production of flame-retardant polymer moldings and/or for rendering polyester and pure and blended cellulose fabrics flame-retardant by impregnation, and as a synergist.

18. A flame-retardant thermoplastic or thermoset polymer molding composition or polymer molding, film, filament or fiber comprising 0.5 to 50% by weight of mixtures as claimed in at least one of claims 1 to 11, 50 to 99.5% by weight of thermoplastic or thermoset polymer or mixtures thereof, 0 to 55% by weight of additives and 0 to 55% by weight of filler or reinforcing materials, where the sum of the components is 100% by weight.

19. A flame-retardant thermoplastic or thermoset polymer molding composition or polymer molding, film, filament or fiber comprising 2 to 30% by weight of mixtures as claimed in at least one of claims 1 to 11, 60 to 94% by weight of thermoplastic or thermoset polymer or mixtures thereof, 2 to 30% by weight of additives and 2 to 30% by weight of filler or reinforcing materials, where the sum of the components is 100% by weight.

## Revendications

1. Mélanges d'au moins un acide diphosphinique de formule (I) 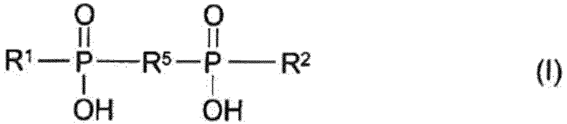 dans laquelle
R¹, R² sont identiques ou différents, et signifient H, éthyle, n-propyle, iso-propyle, n-butyle, iso-butyle, tert.-butyle, n-pentyle, iso-pentyle, n-hexyle et/ou iso-hexyle,
R⁵ signifie éthylène, butylène, hexylène ou octylène,
avec au moins un acide dialkylphosphinique de formule (II) 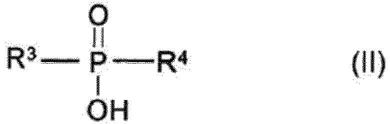 dans laquelle
R³, R⁴ sont identiques ou différents, et signifient indépendamment de R¹ et R² éthyle, n-propyle, iso-propyle, n-butyle, iso-butyle, tert.-butyle, n-pentyle, iso-pentyle, n-hexyle et/ou iso-hexyle,
les mélanges contenant 0,1 à 99,9 % en poids d'acide dialkylphosphinique de formule (I) et 99,9 à 0,1 % en poids d'acide dialkylphosphinique de formule (II).

2. Mélanges selon la revendication 1, **caractérisés en ce que** R¹, R², R³ et R⁴ sont identiques ou différents, et signifient éthyle et/ou butyle, et R⁵ signifie éthylène ou butylène.

3. Mélanges selon la revendication 1 ou 2, **caractérisés en ce qu'**ils contiennent 60 à 99,9 % en poids d'acide diphosphinique de formule (I) et 40 à 0,1 % en poids d'acide dialkylphosphinique de formule (II).

4. Mélanges selon une ou plusieurs des revendications 1 à 3, **caractérisés en ce qu'**ils contiennent 80 à 99,9 % en poids d'acide diphosphinique de formule (I) et 20 à 0,1 % en poids d'acide dialkylphosphinique de formule (II) .

5. Mélanges selon une ou plusieurs des revendications 1 à 4, **caractérisés en ce qu'**ils contiennent 90 à 99,9 % en poids d'acide diphosphinique de formule (I) et 10 à 0,1 % en poids d'acide dialkylphosphinique de formule (II) .

6. Mélanges selon une ou plusieurs des revendications 1 à 5, **caractérisés en ce qu'**ils contiennent 95 à 99,9 % en poids d'acide diphosphinique de formule (I) et 5 à 0,1 % en poids d'acide dialkylphosphinique de formule (II) .

7. Mélanges selon une ou plusieurs des revendications 1 à 6, **caractérisés en ce qu'**ils contiennent 98 à 99,9 % en poids d'acide diphosphinique de formule (I) et 2 à 0,1 % en poids d'acide dialkylphosphinique de formule (II).

8. Mélanges selon une ou plusieurs des revendications 1 à 7, **caractérisés en ce que** l'acide diphosphinique consiste en l'acide éthylène-1,2-bis(éthylphosphinique), l'acide éthylène-1,2-bis(propylphosphinique), l'acide éthylène-1,2-bis(butylphosphinique), l'acide éthylène-1,2-bis(pentylphosphinique), l'acide éthylène-1,2-bis(hexylphosphinique), l'acide butane-1,2-bis(éthylphosphinique), l'acide butane-1,2-bis(propylphosphinique), l'acide butane-1,2-bis(butylphosphinique), l'acide butane-1,2-bis(pentylphosphinique), l'acide butane-1,2-bis(hexylphosphinique), l'acide hexane-1,2-bis(éthylphosphinique), l'acide hexane-1,2-bis(propylphosphinique), l'acide hexane-1,2-bis(butylphosphinique), l'acide hexane-1,2-bis(pentylphosphinique) ou l'acide hexane-1,2-bis(hexylphosphinique), et l'acide dialkylphosphinique consiste en l'acide diéthylphosphinique, l'acide dipropylphosphinique, l'acide dibutylphosphinique, l'acide dipentylphosphinique ou l'acide dihexylphosphinique.

9. Mélanges selon une ou plusieurs des revendications 1 à 8, **caractérisés en ce qu'**ils contiennent 98 à 99,9 % en poids d'acide éthylène-1,2-bis(éthylphosphinique) et 2 à 0,1 % en poids d'acide diéthylphosphinique.

10. Mélanges selon une ou plusieurs des revendications 1 à 9, **caractérisés en ce qu'**ils contiennent en outre au moins un synergiste, celui-ci consistant en un composé contenant de l'azote tel que le mélem, le mélam, le mélon, le borate de mélamine, le cyanurate de mélamine, le phosphate de mélamine, le phosphate de dimélamine, le triphosphate de pentamélamine, le diphosphate de trimélamine, le triphosphate de tétrakismélamine, le pentaphosphate d'hexakismélamine, le diphosphate de mélamine, le tétraphosphate de mélamine, le pyrophosphate de mélamine, le polyphosphate de mélamine, le polyphosphate de mélam, le polyphosphate de mélem et/ou le polyphosphate de mélon ;
en des composés d'aluminium tels que l'hydroxyde d'aluminium, l'halloysite, les produits de saphir, la boehmite, la nano-boehmite ;
en des composés de magnésium tels que l'hydroxyde de magnésium ;
en des composés d'étain tels que les oxydes d'étain ;
en des composés d'antimoine tels que les oxydes d'antimoine ;
en des composés de zinc tels que l'oxyde de zinc, l'hydroxyde de zinc, l'oxyhydrate de zinc, le carbonate de zinc, le stannate de zinc, l'hydroxystannate de zinc, le silicate de zinc, le phosphate de zinc, le borophosphate de zinc, le borate de zinc et/ou le molybdate de zinc ;
en des composés de silicium tels que les silicates et/ou les silicones ;
en des composés de phosphore tels que les acides phosphiniques et leurs sels, les acides phosphoniques et leurs sels et/ou les oxydes de phosphine, les phosphazènes et/ou les (pyro)phosphates de pipérazine ; en des carbodiimides, des pipérazines, des (poly)isocyanates, des polymères de styrène-acryle ; et/ou du carbinylbiscaprolactame ;
en des composés contenant de l'azote du groupe des esters oligomères de l'isocyanurate de tris(hydroxyéthyle) avec des acides polycarbiniques aromatiques, ou la benzoguanamine, l'acétoguanamine, l'isocyanurate de tris(hydroxyéthyle), l'allantoïne, le glycourile, les cyanurates, les composés d'époxyde de cyanurate, le cyanurate d'urée, le dicyanamide, la guanidine, le phosphate et/ou le sulfate de guanidine.

11. Mélanges selon une ou plusieurs des revendications 1 à 10, **caractérisés en ce qu'**ils contiennent 99 à 1 % en poids d'un mélange d'au moins un acide diphosphinique de formule (I) et d'au moins un acide dialkylphosphinique de formule (II) selon au moins l'une quelconque des revendications 1 à 10 et 1 à 99 % en poids de synergiste.

12. Procédé de fabrication de mélanges selon au moins l'une quelconque des revendications 1 à 11, **caractérisé en ce qu'**une source d'acide phosphinique est mise en réaction avec un alcyne en présence d'un initiateur, la source d'acide phosphinique consistant en l'acide éthylphosphinique et l'alcyne consistant en l'acétylène, le méthylacétylène, le 1-butyne, le 1-hexyne, le 2-hexyne, le 1-octyne, le 4-octyne, le 1-butyn-4-ol, le 2-butyn-1-ol, le 3-butyn-1-ol, le 5-hexyn-1-ol, le 1-octyn-3-ol, le 1-pentyne, le phénylacétylène, le triméthylsilylacétylène et/ou le diphénylacétylène, et l'initiateur consistant en un initiateur radicalaire contenant une liaison azote-azote ou oxygène-oxygène, et **en ce que** la température de réaction est comprise entre 50 et 150 °C.

13. Procédé selon la revendication 12, **caractérisé en ce que** l'initiateur radicalaire consiste en le dichlorhydrate de 2,2'-azobis(2-amidinopropane), le dichlorhydrate de 2,2'-azobis(N,N'-diméthylène-isobutyramidine), l'azobis(isobutyronitrile), l'acide 4,4'-azobis(4-cyano-pentanoïque) et/ou le 2,2'-azobis(2-méthylbutyronitrile ou le peroxyde d'hydrogène, le peroxodisulfate de potassium, le peroxyde de dibenzoyle, le peroxyde de di-tert.-butyle, l'acide peracétique, le peroxyde de diisobutyryle, le peroxy-néodécanoate de cumène, le peroxy-néodécanoate de tert.-butyle, le peroxypivalate de tert.-butyle, le peroxypivalate de tert.-amyle, le peroxydicarbonate de dipropyle, le peroxydicarbonate de dibutyle, le peroxydicarbonate de dimyristyle, le peroxyde de dilauroyle, le peroxy-2-éthylhexanoate de 1,1,3,3-tétraméthylbutyle, le peroxy-2-éthylhexylcarbonate de tert.-amyle, le peroxy-isobutyrate de tert.-butyle, le 1,1-di-(tert.-butylperoxy)-cyclohexane, le peroxybenzoate de tert.-butyle, le peroxyacétate de tert.-butyle, le peroxydiéthylacétate de tert.-butyle, le peroxy-isopropylcarbonate de tert.-butyle, le 2,2-di-(tert.-butylperoxy)-butane, l'hydroperoxyde de tert.-amyle et/ou le 2,5-diméthyl-2,5-di-(tert.-butylperoxy)-hexane.

14. Procédé selon la revendication 12 ou 13, **caractérisé en ce que** le solvant consiste en des alcanes linéaires ou ramifiés, des solvants aromatiques à substitution alkyle, des alcools ou des éthers non ou seulement partiellement miscibles avec l'eau, l'eau et/ou l'acide acétique.

15. Procédé selon la revendication 14, **caractérisé en ce que** l'alcool consiste en le méthanol, le propanol, l'i-butanol et/ou le n-butanol ou des mélanges de ces alcools avec de l'eau.

16. Utilisation de mélanges selon au moins l'une quelconque des revendications 1 à 9 en tant que produit intermédiaire pour des synthèses ultérieures, en tant que liants, en tant qu'agents de réticulation ou accélérateurs lors du durcissement de résines époxy, de polyuréthanes et de résines polyester insaturées, en tant que stabilisateurs de polymères, en tant qu'agents phytoprotecteurs, en tant qu'agents séquestrants, en tant qu'additif pour huile minérale, en tant qu'agents anticorrosion, dans des applications de détergents et dans des applications électroniques.

17. Utilisation de mélanges selon au moins l'une quelconque des revendications 1 à 11 en tant qu'agents ignifuges, notamment en tant qu'agents ignifuges pour vernis transparents et revêtements intumescents, en tant qu'agents ignifuges pour le bois et d'autres produits cellulosiques, en tant qu'agents ignifuges réactifs et/ou non réactifs pour polymères, pour la fabrication de matériaux de moulage polymères ignifugés, pour la fabrication de corps moulés polymères ignifugés et/ou pour l'ignifugation de tissus purs et mixtes en polyester et cellulose par imprégnation, et en tant que synergiste.

18. Matériaux de moulage, corps moulés, films, fils et fibres polymères thermoplastiques ou duroplastiques ignifugés, contenant 0,5 à 50 % en poids de mélanges selon au moins l'une quelconque des revendications 1 à 11, 50 à 99,5 % en poids d'un polymère thermoplastique ou duroplastique ou de mélanges de celui-ci, 0 à 55 % en poids d'additifs et 0 à 55 % en poids de charges ou de matériaux renforçants, la somme des composants étant de 100 % en poids.

19. Matériaux de moulage, corps moulés, films, fils et fibres polymères thermoplastiques ou duroplastiques ignifugés, contenant 2 à 30 % en poids de mélanges selon au moins l'une quelconque des revendications 1 à 11, 60 à 94 % en poids d'un polymère thermoplastique ou duroplastique ou de mélanges de celui-ci, 2 à 30 % en poids d'additifs et 2 à 30 % en poids de charges ou de matériaux renforçants, la somme des composants étant de 100 % en poids.
